(19) Europäisches Patentamt
European Patent Office
Office européen des brevets

(11) EP 0 639 209 B1

(12) EUROPEAN PATENT SPECIFICATION

(45) Date of publication and mention of the grant of the patent:
**07.01.1998 Bulletin 1998/02**

(21) Application number: **93909377.9**

(22) Date of filing: **29.04.1993**

(51) Int Cl.[6]: **C09B 69/10**, A62D 7/00

(86) International application number:
**PCT/EP93/01027**

(87) International publication number:
**WO 93/23480 (25.11.1993 Gazette 1993/28)**

# (54) SUBSTANTIALLY PURE SYNTHETIC MELANIN PARTICULARLY USEFUL FOR LOW HAZE OPTICAL DEVICES

IM WESENTLICHEN REINES SYNTHETISCHES MELANIN, BESONDERS GEEIGNET FUER OPTISCHE VORRICHTUNGEN VON GERINGER TRUEBUNG

MELANINE SYNTHETIQUE PURE UTILISEE NOTAMMENT DANS DES DISPOSITIFS OPTIQUES A LEGER VOILE

(84) Designated Contracting States:
**AT CH DE FR GB LI**

(30) Priority: **08.05.1992 IT MI921095**

(43) Date of publication of application:
**22.02.1995 Bulletin 1995/08**

(73) Proprietor: **INTERCAST EUROPE S.P.A.**
**I-43100 Parma (IT)**

(72) Inventor: **GALLAS, James**
**San Antonio, TX 78248 (US)**

(74) Representative: **Vannini, Torquato et al**
**c/o JACOBACCI & PERANI S.p.A.**
**Via Visconti di Modrone, 7**
**20122 Milano (IT)**

(56) References cited:
**US-A- 4 698 374**

- **PATENT ABSTRACTS OF JAPAN vol. 16, no. 485 (C-993)(5528) 8 October 1992**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 639 209 B1

Printed by Jouve, 75001 PARIS (FR)

## Description

The present invention relates to the preparation of substantially pure synthetic melanin readily dispersible in plastics and/or plastics monomers to produce low haze optical devices.

The invention also relates to a process for preparing low haze optical devices obtainable by using the above mentioned melanin.

In recent years increasing attention has been given to the importance of protecting eyes and skin from radiation emitted by artificial and natural light sources. Prolonged exposure of the eyes to solar ultraviolet radiation is believed to result, for example, in the formation of cataracts and general tissue damage. Furthermore, attention has been given to the importance of protecting packaged material from such radiation to reduce the destabilization, degradation, decay or other undesirable effects on that material that may be caused by the radiation.

A variety of optical devices have been produced in the field to meet the potential threat posed by these radiations.

Such optical devices include lenses for sunglasses, contact lenses, aircraft and automobile windows, welders glasses and others.

Besides the well known use of metallic films deposited onto the outer surface and/or the incorporation of dyes and pigments into the matrix of these optical devices as absorbing media, it has been recently proposed - in order to protect the eye and skin - to use melanin as a pigment.

As is known, melanins are defined and classified as in the book entitled "Melanins", by R.A. Nicolaus Published in 1968 by Hermann, Paris - France. The entire information contained in that book is incorporated herein by reference. As defined in that book, melanins constitute a class of pigments which are widespread in the animal and vegetable kingdoms. While the name melanin in Greek means black, not all melanins as pigments are black but may vary from brown to yellow. Melanins are classified in three groups, namely eumelanins, phaomelanins and allomelanins. Eumelanins are derived from the precursor tyrosine shown as Compound (1), whereas phaomelanins are derived from the precursors tyrosine or cysteine shown as Compound (2).

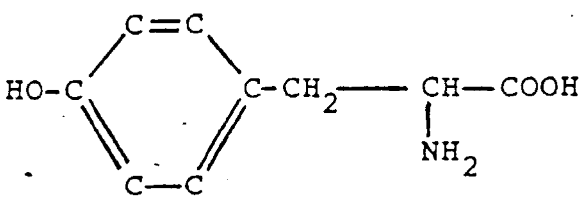

(1)

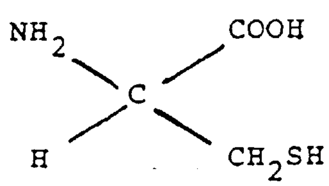

(2)

Allomelanins, i.e., other melanins, are formed from nitrogen-free precursors, such as catechol. It is also believed that 1,8-dihydroxynapthalene may produce melanin through enzymatic oxidation. Further information on melanins is found on page 827, Monograph No. 5629 in The Merck Index (10th Ed. 1983).

Because of the number of reactive sites in the melanin precursors and their intermediates, the polymerization of the precursors is heterogeneous and the result is an amorphous, highly irregular, three dimensional polymer whose structure cannot be characterized or defined; see, Straves-Mobelli, and Wyler, Biological Molecular and Clinical Aspects of Pigmentation: Reinvestigation of the Formation of Dopa Melanin: New Aspects of the Antioxidation of Dopa (12th International Pigment Cell Conference, 1983, 69-77). Furthermore, the number of melanin precursor units in the polymer is not ascertainable. In order to overcome this difficulty, a aiven melanin is characterized primarily by its precursor and the spectroscopic properties of the melanin rather than by an exact determination of the structure and chemical formula thereof. Accordingly, a melanin is characterized as follows:

1. a polymer of a monomeric melanin precursor;

2. a polymer whose monomeric precursors polymerize via a free-radical or an oxidative mechanism;

3. a polymer with a stable free-radical which is often studied through ESR spectrocopy;

4. a polymer with a highly conjugated Pi electron system;

5. an amorphous, three dimensional, heterogeneous polymer of varying molecular weight.

Examples of optical devices of this kind incorporating melanin are described in US 4,698,374; US 5,036,115 and US 5,047,447.

These patents describe the preparation of melanin and its incorporation into a variety of optical plastic and adhesives.

Although it is known how to synthesise melanin in water, the basic teaching of the prior art in this field is however that of avoiding water as a solvent, because of its incompatibility with hydrocarbon solvents and liquid plastic monomers and in general with the plastic materials which are used to produce the optical devices.

The constant teaching of the prior art is therefore that of synthesising melanin in organic solvents before mixing with a liquid plastic monomer.

Although the processes of the prior art yield optical devices which are satisfactory for most applications, nonetheless these devices show an undesired residual haze which is attributed to the constitution of the melanin.

In addition, known processes of incorporating melanin into an optical device require various curing cycles and extra reaction catalyst for the curing of the monomers, when thermosetting polymers are used, in order that the optical device achieve sufficient hardness.

This further disadvantage is to be attributed to an inhibiting effect during the cure of impurities, such as unreacted melanin precursors and partially reacted oligomers produced in the synthesis of the melanin.

The technical problem underlying the present invention is, therefore, that of providing a methodology for preparing synthetic melanin readily dispersible in plastic and plastic monomers, which possesses at the same time a purity and structure which allows to substantially eliminate the haze affecting the known optical devices.

This technical problem is solved by a process of preparing a solution of substantially pure synthetic melanin comprising the steps of:

a) polymerizing a melanin precursor in an aqueous solution so as to obtain crude synthetic melanin;
b) precipitating by acidification the crude melanin thus obtained from said aqueous solution;
c) extracting from the aqueous solution the acidified melanin by means of an organic solvent in the presence of at least a salt.

It has unexpectedly been found that a substantially pure solution of synthetic melanin may be obtained by first polymerizing a melanin precursor in an aqueous solution and then extracting the melanin polymer thus obtained with an organic solvent after a precipitation step carried out while the melanin is in the aqueous phase.

After acidification the melanin polymer is completely solubilized by the organic solvent, so that this phase transfer may allow a swift and easy purification of the melanin.

Thanks to the insolubility in the organic solvent of low molecular weight oligomers produced during the polymerization, the process of the invention affords the additional advantage of a better control of the purified melanin molecular weight distribution.

By selecting a proper volume of the organic solvent a simultaneous concentration of the melanin may be advantageously carried out during the phase transfer of the latter.

In accordance with a further aspect of the present invention, it has also unexpectedly been found that - contrary to what has been constantly observed in the prior art - by drying the synthetic melanin solution of the present invention, a powder is obtained which is extremely soluble either in the most common organic solvents or in the plastics monomers used for the manufacture of optical devices constituted by thermosetting polymers.

The invention therefore provides a process for producing substantially pure synthetic melanin in powder form, which comprises the step of drying the melanin solution described hereinabove.

Preferably, such drying is carried out by heating the solution under vacuum at a temperature comprised between 40 and 70°C, particularly between 50 and 60°C.

A substantially pure synthetic melanin in dry form is advantageously obtained in this way, which may be used as such in injection moulding processes admixed with a thermoplastic polymer in pellets, or dissolved in a suitable solvent or in a monomer to yield a thermosetting polymer.

In dry form as well, the synthetic melanin obtained in accordance with the process of the invention, allows the production of low haze optical devices.

In the present invention the preferred melanin precursors are DOPA (compound (3)) and dopamine (compound (4)) which form eumelanins and catechol (compound (5)) which form allomelanin.

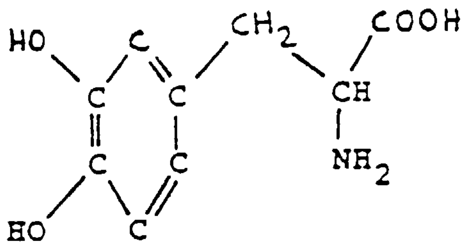 (3)

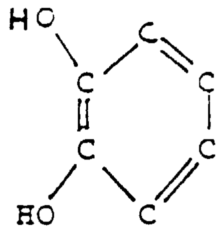 (5)

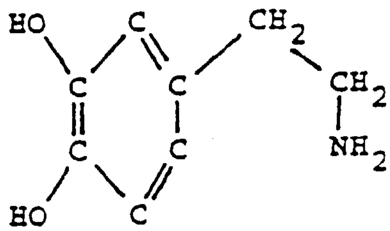 (4)

Other known melanin precursors which may be used in the present invention are: DOPA, dopamine compounds, cathecol, 5,6-dihydroxyindole; leucodopachrome; tryptamine; serotonin; 5,6-dihydroxyindole-2-carboxylic acid; epinephrine; norepinephrine; tyrosine; adrenochrome; and 1,8-dihydroxynapthalene.

According to the present invention, the polymerization reaction is carried out in an aqueous solution using a so-called free-radical initiator. The free-radical initiator is chosen by considering its solubility properties and the desired reaction kinetics. The most preferred free-radical initiator is benzoyl peroxide.

Other free-radical initiators are: potassium persulphate and hydrogen peroxide.

According to the present invention, the polymerization of a melanin precursor is carried out in an aqueous solution maintained at a pH above 8 using any suitable buffering agent such as borax and tris (hydroxymethyl)aminomethane.

In order to accelerate the polymerization, the reaction may be carried out at a temperature of from 30 to 60°C.

Once formed, the melanin polymer is separated from the associated impurities by acidification: the low molecular weight impurities and other by-products of the polymerization reaction, in fact, remain in the supernatant, while the melanin polymer precipitates to the bottom of the reaction vessel.

Acidification of the aqueous solution containing the melanin may be carried out by means of any suitable acid, such as sulphuric acid.

In order to improve the separation of the melanin from the impurities, once the melanin polymer is decanted the supernatant is discarded and substituted with fresh deionized water acidified with sulphuric acid.

This operation may be repeated several times in order to remove as completely as possible any impurities from the melanin.

The acidified melanin is then extracted from the aqueous solution and purified at the same time by means of an organic solvent in the presence of a suitable salt such as sodium sulphate or magnesium sulphate.

In fact it has unexpectedly been found that only the acidified melanin, but not the associated impurities, enters into the organic solvent phase which then segregates from the aqueous phase due to the presence of said salt.

Organic solvents that may be used are, among others, acetonitrile, THF, dimethylsulfoxide (DMSO), chloroform, toluene, 1,2-dichloroethane, alcohols, glycols, etc.

In accordance with the present invention, a concentrated solution of melanin may be obtained by selecting a suitable volume of organic solvent as a proportion of the volume of the aqueous solution.

preferably, the ratio between the volume of organic solvent and the volume of aqueous solution ranges from 2:10 to 4:10.

According to a further embodiment of the present invention, the dispersibility of the melanin in plastic or plastic monomers, may be further enhanced by carrying out an additional step of derivatizing the purified melanin by means of a compound selected in the group comprising: bisfunctional agents such as allyl, methallyl or vinyl chloroformates; methacryl chloride; methacryl-, oxypropyl-, chlorosilane; isocyamatoethyl methacrylate; and other agents containing a free radical polymerizable group as well as a chemical reactive group that can be reacted with carboxyl or phenolic functional groups on the melanin. Furthermore, similar agents that cannot copolymerize with the selected plastic monomers can also be used as flushing or solubilizing agents. In the latter case, the melanin will not be covalently incorporated into the ultimate polymer but will only be sequestered and physically trapped in the polymer matrix.

The process of the present invention may further comprise - after the step of derivatization of the purified melanin - the step of purifying the derivatized melanin by repeated washing with an acidified aqueous solution.

In this case as well a salt is added, after each washing cycle, to separate the aqueous phase from the organic phase incorporating tha melanin.

An even more pure derivatized melanin may be obtained in this way. Also in this case, the resulting solution may be concentrated operating on the volume ratio between the washing solution and the organic solvent.

The solution of substantially pure synthetic melanin obtainable by the process of the present invention may be used to prepare a low haze optical device in a number of ways.

With the term "optical device" is meant any lens system or similar devices such as opthalmic devices including lenses for sunglasses, protective eyewear such as welders or skiers masks or goggles, and hard (hydrophobic) or soft (hydrophilic) contact or intraocular lenses; glass or plastic windows such as automobile, building or airplane windows; glass or plastic packaging material such as beverage and food containers; thin plastic sheets; umbrellas, canopies; and other similar devices or substances suitable for the protection of humans or radiation-sensitive substances from radiation.

With respect to opthalmic lenses, it should be understood that those lenses may be prepared with or without optical prescriptions to correct visual defects.

A first process according to the present invention by which the melanin may be incorporated into a lens or similar medium including, but not limited to, opthalmic devices, windows, packaging material, or any other radiation protection device made out of polymeric material, contemplates the simultaneous polymerization of the melanin with a suitable monomer.

In this embodiment, a polymer is obtained wherein the melanin is uniformly dispersed.

When the melanin is solubilized in an organic solvent, it is preferred to use a liquid monomer such as diethylene glycol bis (allyl-carbonate), otherwise known as CR-39 a trademark product of PPG, styrene, acrylates and methylmethacrylates, vinyl monomers, polyurethane forming monomers (without a radicalic catalyst) or any other monomer suitable for the preparation of sunglass lenses, contact lenses, intraocular lenses, windows, packaging material or any other radiation protection devices such as umbrellas, canopies, etc.

When the melanin is in the form of a dry powder, it may be admixed with suitable thermoplastic polymers in pellets; among the latter preferred are polycarbonate (PC), polymethylmethacrylate (PMMA), cellulose acetates, propionates and acetobutirrates.

In the first case, the liquid monomers polymerize by free radical polymerization and yield a polymer which is a clear, transparent plastic suitable as an optical lens. According to the present invention, the monomer polymerization is carried out in the presence of a so-called free-radical initiator.

Among them, preferred are cyclohexylpercarbonate, di-isopropyl-percarbonate and benzoyl peroxide.

The melanin is dispersed in the lens system in a non-aggregated form. Although the polymer obtained may be used primarily for opthalmic devices, it may also be used in connection with windows, certain packaging material and other similar devices.

In the polymerization of the monomer and the melanin of the present invention, a preferred process is to add the melanin to the liquid monomer while providing good mixing. The mixture is then added with a free-radical initiator and poured into a glass mould wherein is cured using a temperature cycle which depends upon the initiator used.

Generally speaking, temperatures of from 35 to 100°C and curing times of from 10 to 40 hours are used.

In general, the greater the concentration of the melanin, the greater the concentration of free-radical initiator is required for the polymerization. Using CR-39 as a monomer and temperatures of from 55° to 60°C, it has been found that, if the weight ratio of free-radical initiator to melanin is between 10 and 30 a correct polymerization occurs.

In another process of the present invention, the melanin is applied as a coating onto the surface of the optical device such as for example lenses for sunglasses, contact lenses, intraocular devices, protective eywears, windows, packaging materials or any other polymeric plastic or glass protective device.

In the case of a small lens, drops of the melanin solution of the invention are placed onto a clean transparent lens surface and the solvent is then allowed to evaporate, so as to obtain a uniform melanin film. Similar techniques may be used to place the melanin on other lenses or similar media.

In another embodiment, the solution of the present invention is mixed with a transparent polymer or plastic which serves as a binder or as a binder/adhesive. The solvent of the melanin is then evaporated having served as means of dispersing melanin in the binder/adhesive. A suitable binder/adhesive is the common epoxy resin.

Thereafter, a suitable hardener is combined with the epoxy/melanin liquid to form a uniform liquid mixture which is then immediately sandwiched between two parallel transparent lenses, or similar media. By this method a melanin film is produced which also acts as an adhesive to join the parallel lenses. This method of incorporating melanin into a medium may be used to form melanin-containing opthalmic devices, windows, packaging devices or other similar radiation protection devices.

In another process, the melanin solution is mixed with commercially available by glue such as "Loctite®". The

mixture is then placed between two opthalmic lenses, two windows sheets, or similar media. The sandwiched product is placed in the path of a UV light to cure the adhesive and yield the hardening thereof.

Another process for preparing a melanin containing optical device suitable for providing protection from glaciation, entails the preparation of a very thin film or sheet of plastic containing melanin. The film may be affixed to the surface of a lens, a window or similar apparatus by using an adhesive Furthermore, the film may be placed or laminated between two lenses, window sheets or similar devices by using an adhesive. Furthermore, the melanin-containing sheet or film may be placed between two glass lenses or similar media under heat and pressure (autoclaving), whereby the melanin sheet may act as a binder. Alternatively, the film may be used as such as a radiation protection device in packaging or similar applications. Melanin-containing thin sheets may also be prepared by the following processes.

A first of such processes entails of the use of a melanin solution in an organic solvent suitable for the production of the film and includes the steps of:

- dissolving the plastic material in the solution;
- applying the solution thus obtained onto a flat, chemically inert surface;
- heating the latter surface.

The solvent is allowed to evaporate and the resultant product is a thin transparent plastic sheet or film containing melanin.

A second process for preparing films and in general thin melanin-containing plastic sheets entails the use, in the solution of the present invention, of an organic solvent (such as acetonitrile) which does not dissolve the plastic to be used as a transparent optical sheet, or radiation absorbing device. The plastic sheet, such as a polyvinyl chloride plastic sheet, is treated with, i.e. dipped into the melanin-acetonitrile solution under heat and pressure. In this way the melanin diffuses into the plastic and becomes entrapped. After a period of time the sheet is removed and the resultant product is a plastic clear and transparent sheet having melanin incorporated therein. The darkness of the sheet can be varied by varying the concentration of the melanin in the solution. Furthermore, the rate of diffusion of the melanin particles can be increased by increasing the temperature.

When the substantially pure melanin of the present invention is in dry form, the additional advantage of a convenient use in the processes of injection moulding in admixture with thermoplastic polymers in pellets is afforded.

As a consequence, a noteworthy simplification is achieved of injection moulding processes by means of which low haze optical devices, such as lenses for sunglasses, made of thermoplastic polymers may be obtained.

Furthermore, transport and stocking of the melanin in powder form are greatly facilitated with a reduction of the costs involved.

The present invention will be further illustrated with reference to the following non-limitative examples.

**EXAMPLE 1**

Preparation of the melanin solution of the invention

20g of catechol were dissolved in 1 liter of water and the resulting solution was then heated to 30°C and added with 12g of potassium persulphate.

20g of Borax buffer were added next and the pH adjusted to 8 with a caustic soda solution.

The solution was stirred for 24 hours.

40 ml of concentrated sulphuric acid were added to the solution to obtain the melanin precipitation.

After 24 hours approximately, 600 ml of the supernatant were discarded and replaced with 600 ml of fresh deionized water acidified with 20 ml of concentrated sulphuric acid.

The process was repeated 5 times and the last supernatant discarded.

Approximately 100 ml of acetonitrile were added and the resulting mixture stirred.

50g of sodium sulphate were then added so as to cause the separation of the aqueous phase from the acetonitrile phase.

An organic solution containing 4g of substantially pure synthetic melanin was produced which was derivatized by adding 8 ml of triethylamine and then 8 ml of methacryloyl chloride as derivatizing agent.

The latter was added dropwise and the solution allowed to stir for 24 hours before filtering to remove any salts from the reaction.

The derivatized melanin thus produced was then washed with water by mixing 100 ml of the derivatized melanin solution with 100 ml of deionized water.

50g of sodium sulphate were added to the mixture to cause the water and acetonitrile to separate.

The melanin/acetonitrile phase was mixed again with fresh water and the procedure was repeated 5 times.

The melanin/acetonitrile solution was stored over sodium sulphate for several days to remove any residual water.

**EXAMPLE 2**

A second solution of substantially pure synthetic and derivatized melanin was obtained as described in previous example 1 by using methyl chloroformate instead of methacryloyl chloride.

**EXAMPLE 3**

A third solution of substantially pure synthetic derivatized melanin was obtained as described in previous example 1 by using THF instead of acetonitrile as organic solvent.

**EXAMPLE 4**

A fourth solution of substantially pure derivatized synthetic melanin was obtained as described in the preceding example 3 by substituting methalcryoyl chloride with methylchloroformate.

**EXAMPLE 5**

A melanin-containing sunglass lens was prepared using the solution obtained according to the preceding example 1 as follows.

5g of cyclohexyl percarbonate (CHPH) were dissolved into 100 ml of diethyleneclicol bis (allyl carbonate) ("CR-39") at 25°C by stirring continuously until the CHPC was fully dissolved and the solvent of the monomer evaporated.

3 ml of the melanin solution were added and a continuous mixing was carried out for 1 hour at 30°C.

The solution thus obtained was poured into a glass mould wherein was cured by heating the mould in a water bath.

More particularly, a thermal cycle was used heating the mould from 40" to 85°C for about 20 hours.

A clear, transparent and low haze solid lens with an amber colour, incorporating melanin in a non-aggregated form uniformly dispersed in the polymer matrix, was obtained.

The relative transmission of the lens, having the thickness of 2 mm, is reported in Table 1 which follows together with that of a lens obtained in accordance with US 5,047,447.

In the some Table the haze values as measured on tne lenses according to DIN 58 217 and BS 2724/1987 standards are also reported.

TABLE 1

| | Lens of the present invention | Lens according to US 5 047 447 |
|---|---|---|
| Transmission (%) | 55 | 58 |
| Haze * $\frac{cd/m^2}{lux}$ | 0.25 | 1.2 |

* highest admitted values by the standards: $\frac{0.5\ cd/m^2}{lux}$

**EXAMPLE 6**

3 ml of a solution of substantially pure synthetic derivatized melanin obtained according to the preceding example 2 were added to about 2 ml of an epoxy resin.

The organic solvent (acetonitrile) was then removed from the mixture by evaporation, leaving melanin uniformly dispersed in the epoxy resin.

An epoxy catalyst, or hardener was added and the system slowly stirred to produce an even colour. Some drops of the product were deposited onto either glass of plastic lenses and a second identical glass or plastic lens was placed over the former.

In this way an optical device was obtained including two superimposed glass or plastic lenses linked together by a melanin-incorporating epoxy resin layer.

**EXAMPLE 7**

3 ml of the solution obtained in accordance with the preceding example 3 were mixed with 2 ml of a commercially available UV curing glue which is known as "Loctite 350".

A melanin-containing glue was obtained in this way.

The mixture was then placed between two identical lenses subsequently pressed against each other. The resulting composite lens was then irradiated with a UV light beam so as to cure the adhesive between the lenses.

**EXAMPLE 8**

5 ml of the solution according to the preceding example 1 were mixed with 10g of polymethylmethacrylate.

The resultant solution was poured onto a flat "Teflon" (registered trademark) coated plate.

The organic solvent (acetonitrile) was allowed to slowly evaporate.

The resulting product was a thin transparent plastic sheet having a brown to amber colour. The sheet was then placed between two identical optical lenses and glued thereto with an adhesive to form a multi-layered composite lens.

**EXAMPLE 9**

Thin sheets of polyvinylchloride having a thickness of less then 1 mm were bathed in 100 ml of the solution according to example 2 for 5 seconds at room temperature and were then removed.

The result was an optically clear, haze free, transparent, thin sheet of polyvinylchloride incorporating melanin.

The optical devices obtained in accordance with Examples 6-9 were subjected to transmission tests and compared with similar devices obtained in accordance with the prior art.

In all cases a substantially lower haze was observed with a substantially increase of the optical properties of the devices.

**EXAMPLE 10**

**Preparation of melanin in dry form**

The solution of substantially pure and derivatized melanin obtained in accordance with the preceding example 1 was injected into a stirred vessel containing hexane so as to obtain the melanin precipitation to the bottom of the vessel.

The precipitated melanin was then filtered under vacuum using a filter paper obtaining melanin in the form of a solid wet residue.

The latter was then dried in an oven maintained at a vacuum degree of about 30" Hg at a temperature of from 50 to 60°C.

A melanin powder was obtained which showed a surprising solubility in a series of organic solvents and plastic monomers.

**EXAMPLE 11**

A substantially pure derivatized melanin in powder form was obtained from the solution of preceding example 3 with the same technique described in example 10.

The melanin showed a similar solubility characteristics in the most common organic solvents and plastic monomers.

**EXAMPLE 12**

A substantially pure derivatized melanin in powder form was obtained according to the preceding example 10 by substituting hexane with ethyl ether.

**EXAMPLE 13**

The melanin in powder form obtained according to the preceding examples 10-12 was dissolved in acetonitrile wherein it was solubilized without any difficulty in a substantially complete manner.

In accordance with the preceding example 5 a series of lenses were produced which showed a relative transmission and a haze substantially identical to those reported in the Table 1 hereinabove.

**EXAMPLE 14**

A series of polycarbonate lenses were obtained by injection moulding by mixing polycarbonate in pelletes and the melanin in powder form obtained according to the preceding examples 10-12.

More particularly, an amount of powder was used so as to obtain lenses incorporating from 10 to 15 mg of melanin.

The moulding operations were carried out with conventional devices at temperatures varying from 150 to 200°C.

In this case as well lenses were obtained having low haze and incorporating melanin uniformly dispersed in the polymer matrix.

## Claims

1. A process for preparing a solution of substantially pure synthetic melanin readily dispersible in plastics and plastics monomers. comprising the steps of:

    a) polymerizing a melanin precursor in an aqueous solution so as to obtain crude synthetic melanin;
    b) precipitating by acidification the crude melanin thus obtained from said aqueous solution;
    c) extracting from the aqueous solution the acidified melanin by means of an organic solvent in the presence of at least a salt.

2. A process according to claim 1, wherein said polymerization is carried out in an aqueous solution buffered at a pH 8 or above.

3. A process according to claim 1, wherein said polymerization step is carried out at a temperature of from 30 to 60°C.

4. A process according to claim 1, wherein said melanin precursor is selected from the group comprising: DOPA, dopamine compounds, catechol, 5,6-dihydroxyindole; leucodopachrome; tryptamine; serotonin; 5,6-dihydroxyindole-2-carboxylic acid; epinephrine; norepinephrine; tyrosine; adrenochrome and 1,8-dihydroxynapthalene.

5. A process according to claim 1, wherein said organic solvent is selected from the group comprising: acetonitrile, tetrahydrofuran (THF), dimethylsulfoxide (DMSO), chloroform, toluene, 1,2-dichloroethane and mixtures thereof.

6. A process according to claim 1, wherein said polymerization step is carried out in the presence of at least one free-radical initiator.

7. A process according to claim 6, wherein said free-radical initiator is benzoyl peroxide.

8. A process according to claim 1, wherein said extraction step of the acidified melanin is carried out with a simultaneous concentration of the melanin in the organic solvent.

9. A process according to claim 8, wherein said extraction step is carried out by using a ratio between the volumes of said aqueous solution and said organic solvent of from 2:10 to 4:10.

10. A process according to claim 1, further comprising the step of derivatizing the concentrated and purified melanin by means of a compound selected in the group comprising: bisfunctional agents such as allyl, methallyl or vinyl chloroformates; methacrylchloride, methacryl-, oxypropyl-, dimethyl-, chlorosilane; isocyanatoethyl methacrylate.

11. A process according to claim 1 or 10, further comprising the step of purifying the substantially pure melanin by washing with water followed by extraction with said organic solvent.

12. A solution of synthetic melanin purified by repeated washing with an acidified solution and dispersible in plastics and plastics monomers obtainable by a process according to claims 1-11.

13. A solution according to claim 12 further comprising a flushing or a solubilizing agent.

14. A process for preparing substantially pure synthetic melanin in powder form, readily dispersible in an organic solvent, in plastics and plastics monomers, comprising the step of drying a solution according to claim 12.

15. A process according to claim 14, wherein said drying step is carried out by heating under vacuum said solution at a temperature of from 40 to 70°C.

16. A synthetic melanin in powder form purified by repeated washing with an acidified solution, readily dispersible in an organic solvent, in plastics and plastics monomers, obtained by a process according to anyone of claims 14 and 15.

**17.** A process for preparing an optical device with a haze lower than 1.2 $cd/m^2$ comprising the steps of:

a) mixing a solution according to claim 12 or 13 with a suitable plastics monomer;
b) polymerizing the mixture thus obtained.

**18.** A process according to claim 17, wherein said monomer is selected in the group comprising: diethylene glycol-bis-(allylcarbonate), styrene acrylates and methyl methacrylates, vinyl monomers, polyurethane-forming monomers.

**19.** A process according to claim 18, wherein said polymerization step is carried out at a temperature of from 35 to 100°C for a time of from 10 to 40 hours.

**20.** A process for preparing an optical device with a haze lower than 1.2 $cd/m^2$ comprising the step of applying a solution according to claims 12 or 13 to the surface of a first transparent glass or plastics substrate.

**21.** A process according to claim 20, wherein prior to the applying step, the solution is mixed with a resin or an adhesive.

**22.** A process according to claim 21, wherein said resin is an epoxy resin.

**23.** A process according to claim 21, further comprising the step of superimposing a second transparent glass or plastics substrate on said first substrate after applying said mixture.

**24.** A process for preparing a low haze optical device comprising the step of :

- dipping a plastics sheet into a solution according to anyone of claims 12 or 13.

**25.** A process according to claim 24, further comprising the step of adhering said sheet to the surface of a transparent glass or plastics substrate.

**26.** A process for preparing an optical device with a haze lower than 1.2 $cd/m^2$, comprising the steps of :

a) mixing melanin in powder form according to claim 16 with plastics;
b) polymerizing the mixture thus obtained.

**27.** A process according to claim 26, wherein said plastics is selected in the group comprising thermoplastic polymers.

**28.** An optical device with a haze lower than 1.2 $cd/m^2$ obtainable by a process according to anyone of claims 17-27.

**Patentansprüche**

**1.** Verfahren zur Zubereitung einer Lösung von praktisch reinem synthetischem Melanin leichter Dispergierbarkeit in Kunststoffen und Kunststoffmonomeren durch

a) Polymerisieren eines Melaninvorläufers in einer wäßrigen Lösung zur Gewinnung von rohem synthetischem Melanin;
b) Ausfällen des hierbei erhaltenen rohen Melanins aus der wäßrigen Lösung durch Ansäuern und
c) Extrahieren des angesäuerten Melanins aus der wäßrigen Lösung mit Hilfe eines organischen Lösungsmittels in Gegenwart mindestens eines Salzes.

**2.** Verfahren nach Anspruch 1, wobei die Polymerisation in einer auf einem pH-Wert von 8 oder darüber gepufferten wäßrigen Lösung durchgeführt wird.

**3.** Verfahren nach Anspruch 1, wobei die Polymerisation bei einer Temperatur von 30-60°C durchgeführt wird.

**4.** Verfahren nach Anspruch 1, wobei der Melaninvorläufer aus der Gruppe DOPA, Dopaminverbindungen, Brenzkatechin, 5,6-Dihydroxyindol, Leucodopachrom, Tryptamin, Serotonin, 5,6-Dihydroxyindol-2-carbonsäure, Epinephrin, Norepinephrin, Tyrosin, Adrenochrom und 1,8-Dihydroxynaphthalin ausgewählt ist.

**5.** Verfahren nach Anspruch 1, wobei das organische Lösungsmittel aus der Gruppe Acetonitril, Tetrahydrofuran (THF), Dimethylsulfoxid (DMSO), Chlorophorm, Toluol, 1,2-Dichlorethan und Mischungen hiervon ausgewählt ist.

**6.** Verfahren nach Anspruch 1, wobei die Polymerisationsstufe in Gegenwart mindestens eines Radikalbildners durchgeführt wird.

**7.** Verfahren nach Anspruch 6, wobei der Radikalbildner aus Benzoylperoxid besteht.

**8.** Verfahren nach Anspruch 1, wobei die Extraktion des angesäuerten Melanins unter gleichzeitigem Aufkonzentrieren des Melanins in dem organischen Lösungsmittel durchgeführt wird.

**9.** Verfahren nach Anspruch 8, wobei die Extraktion unter Einsatz eines Volumenverhältnisses wäßrige Lösung/organisches Lösungsmittel von 2/10 bis 4/10 durchgeführt wird.

**10.** Verfahren nach Anspruch 1, bei welchem zusätzlich das aufkonzentrierte und gereinigte Melanin mit Hilfe einer aus der Gruppe bifunktionelle Mittel, wie Allyl-, Methallyl- oder Vinylchlorformiate, Methacrylchlorid, Methacryl-, Oxypropyl-, Dimethyl- oder Chlorsilan und Isocyanatoethylmethacrylat ausgewählten Verbindung derivatisiert wird.

**11.** Verfahren nach Anspruch 1 oder 10, bei welchem zusätzlich das praktisch reine Melanin durch Waschen mit Wasser und anschließende Extraktion mit dem betreffenden organischen Lösungsmittel gereinigt wird.

**12.** Lösung von synthetischem Melanin, die durch wiederholtes Waschen mit einer angesäuerten Lösung gereinigt und in Kunststoffen und Kunststoffmonomeren dispergierbar ist, erhältlich nach einem Verfahren gemäß einem der Ansprüche 1-11.

**13.** Lösung nach Anspruch 12, die zusätzlich ein Spülmittel oder ein löslich machendes Mittel enthält.

**14.** Verfahren zur Herstellung von praktisch reinem synthetischem Melanin in Pulverform, das ohne Schwierigkeiten in einem organischen Lösungsmittel, in Kunststoffen und Kunststoffmonomeren dispergierbar ist, durch Trocknen einer Lösung nach Anspruch 12.

**15.** Verfahren nach Anspruch 14, wobei die Trocknungsstufe durch Erwärmen der Lösung unter Vakuum auf eine Temperatur von 40-70°C durchgeführt wird.

**16.** Synthetisches Melanin in Pulverform, das durch wiederholtes Waschen mit einer angesäuerten Lösung gereinigt und in einem organischen Lösungsmittel, in Kunststoffen und Kunststoffmonomeren ohne Schwierigkeiten dispergierbar ist, erhalten nach einem Verfahren gemäß einem der Ansprüche 14 und 15.

**17.** Verfahren zur Herstellung einer optischen Vorrichtung mit einem Trübungswert unter 1,2 $cd/m^2$ durch

a) Vermischen einer Lösung nach Anspruch 12 oder 13 mit einem geeigneten Kunststoffmonomer, und
b) Polymerisieren des erhaltenen Gemischs.

**18.** Verfahren nach Anspruch 17, wobei das Monomer aus der Gruppe Diethylenglykol-bis-(allylcarbonat), Styrolacrylaten und Methylmethacrylaten, Vinylmonomeren und Polyurethan-bildenden Monomeren ausgewählt ist.

**19.** Verfahren nach Anspruch 18, wobei die Polymerisation bei einer Temperatur von 35-100°C während 10-40 h durchgeführt wird.

**20.** Verfahren zur Herstellung einer optischen Vorrichtung eines Trübungswerts unter 1,2 $cd/m^2$ durch Applikation einer Lösung nach Anspruch 12 oder 13 auf die Oberfläche eines ersten durchsichtigen Glas- oder Kunststoffsubstrats.

**21.** Verfahren nach Anspruch 20, wobei die Lösung vor ihrer Applikation mit einem Harz oder einem Klebstoff gemischt wird.

**22.** Verfahren nach Anspruch 21, wobei es sich bei dem Harz um ein Epoxyharz handelt.

**23.** Verfahren nach Anspruch 21, bei welchem zusätzlich auf das erste Substrat nach Applikation des Gemischs ein zweites durchsichtiges Glas- oder Kunststoffsubstrat gelegt wird.

**24.** Verfahren zur Herstellung einer einen niedrigen Trübungswert aufweisenden optischen Vorrichtung durch Eintauchen einer Kunststofflage oder -folie in eine Lösung nach einem der Ansprüche 12 oder 13.

**25.** Verfahren nach Anspruch 24, bei welchem zusätzlich die Lage oder Folie an der Oberfläche eines durchsichtigen Glas- oder Kunststoffsubstrats befestigt wird.

**26.** Verfahren zur Herstellung einer optischen Vorrichtung eines Trübungswerts unter 1,2 cd/$m^2$ durch

a) Vermischen von Melanin in Pulverform nach Anspruch 16 mit einem Kunststoff und
b) Polymerisieren des erhaltenen Gemischs.

**27.** Verfahren nach Anspruch 26, wobei der Kunststoff aus thermoplastischen Polymeren ausgewählt ist.

**28.** Optische Vorrichtung eines Trübungswerts unter 1,2 cd/$m^2$, erhältlich nach einem Verfahren gemäß einem der Ansprüche 17-27.

**Revendications**

**1.** Procédé de préparation d'une solution de mélanine synthétique sensiblement pure facilement dispersable dans des matières plastiques et des monomères de matières plastiques, comportant les étapes consistant à :

a) faire polymériser un précurseur de mélanine dans une solution aqueuse de façon à obtenir de la mélanine synthétique brute;
b) faire précipiter par acidification la mélanine brute ainsi obtenue à partir de ladite solution aqueuse;
c) extraire de la solution aqueuse la mélanine acidifiée, au moyen d'un solvant organique en présence d'au moins un sel.

**2.** Procédé selon la revendication 1, dans lequel ladite polymérisation s'effectue dans une solution aqueuse tamponnée à un pH de 8 ou supérieur.

**3.** Procédé selon la revendication 1, dans lequel ladite étape de polymérisation s'effectue à une température comprise entre 30 et 60°C.

**4.** Procédé selon la revendication 1, dans lequel ledit précurseur de mélanine est choisi dans le groupe comprenant : la DOPA, les composés de la dopamine, le catéchol, le 5,6-dihydroxyindole; un leuco-dopachrome; la tryptamine, la sérotonine; l'acide 5,6-dihydroxyindole-2-carboxylique; l'épinéphrine; la norépinéphrine; la tyrosine; un adrénochrome et le 1,8-dihydroxynaphtalène.

**5.** Procédé selon la revendication 1, dans lequel ledit solvant organique est choisi dans le groupe comprenant : l'acétonitrile, le tétrahydrofurane (THF), le diméthylsulfoxyde (DMSO), le chloroforme, le toluène, le 1,2-dichloroéthane et des mélanges de ceux-ci.

**6.** Procédé selon la revendication 1, dans lequel ladite étape de polymérisation s'effectue en présence d'au moins un initiateur de radicaux libres.

**7.** Procédé selon la revendication 6, dans lequel ledit initiateur de radicaux libres est le peroxyde de benzoyle.

**8.** Procédé selon la revendication 1, dans lequel ladite étape d'extraction de la mélanine acidifiée s'effectue avec une concentration simultanée de la mélanine dans le solvant organique.

**9.** Procédé selon la revendication 8, dans lequel ladite étape d'extraction s'effectue en utilisant un rapport entre les volumes de ladite solution aqueuse et dudit solvant organique compris entre 2:10 et 4:10.

**10.** Procédé selon la revendication 1, comportant en outre l'étape consistant à dérivatiser la mélanine concentrée et

purifiée, à l'aide d'un composé choisi dans le groupe comprenant : des agents bifonctionnels tels que les chloroformiates d'allyle, de méthallyle ou de vinyle; le méthacrylchlorure, le méthacryl-, oxypropyl-, diméthyl-, chlorosilane; le méthacrylate d'isocyanatoéthyle.

**11.** Procédé selon la revendication 1 ou 10, comportant en outre l'étape consistant à purifier la mélanine sensiblement pure en la lavant avec de l'eau, suivie par une extraction avec ledit solvant organique.

**12.** Solution de mélanine synthétique purifiée par un lavage répété avec une solution acidifiée et dispersable dans des matières plastiques et des monomères de matières plastiques, pouvant être obtenue par un procédé selon les revendications 1 à 11.

**13.** Solution selon la revendication 12 comprenant en outre un agent de rinçage ou un agent solubilisant.

**14.** Procédé de préparation de mélanine synthétique sensiblement pure sous forme de poudre, facilement dispersable dans un solvant organique, dans des matières plastiques ou des monomères de matières plastiques, comportant l'étape consistant à sécher une solution selon la revendication 12.

**15.** Procédé selon la revendication 14, dans lequel ladite étape de séchage s'effectue en chauffant sous vide ladite solution à une température comprise entre 40 et 70°C.

**16.** Mélanine synthétique sous forme de poudre purifiée par des lavages répétés avec une solution acidifiée, facilement dispersable dans un solvant organique, dans des matières plastiques ou des monomères de matières plastiques, obtenue par un procédé selon l'une quelconque des revendications 14 et 15.

**17.** Procédé de préparation d'un dispositif optique avec un voile inférieur à 1,2 $cd/m^2$, comportant les étapes consistant à:

a) mélanger une solution selon la revendication 12 ou 13 avec un monomère de matière plastique approprié;
b) faire polymériser le mélange ainsi obtenu.

**18.** Procédé selon la revendication 17, dans lequel ledit monomère est choisi dans le groupe comprenant : le diéthylèneglycol-bis(allylcarbonate), les acrylates de styrène et les méthacrylates de méthyle, les monomères vinyliques, les monomères formant des polyuréthanes.

**19.** Procédé selon la revendication 18, dans lequel ladite étape de polymérisation s'effectue à une température comprise entre 35 et 100°C pendant une durée allant de 10 à 40 heures.

**20.** Procédé de préparation d'un dispositif optique avec un voile inférieur à 1,2 $cd/m^2$, comportant l'étape consistant à appliquer une solution selon les revendications 12 ou 13 sur la surface d'un premier substrat transparent en verre ou en matière plastique.

**21.** Procédé selon la revendication 20, dans lequel avant l'étape d'application, la solution est mélangée avec une résine ou un adhésif.

**22.** Procédé selon la revendication 21, dans lequel ladite résine est une résine époxyde.

**23.** Procédé selon la revendication 21, comportant en outre l'étape consistant à superposer un second substrat transparent en verre ou en matière plastique sur ledit premier substrat après l'application dudit mélange.

**24.** Procédé de préparation d'un dispositif optique à léger voile, comportant les étapes consistant à:

- immerger une feuille de matière plastique dans une solution selon l'une quelconque des revendications 12 ou 13.

**25.** Procédé selon la revendication 24, comportant en outre l'étape consistant à faire adhérer ladite feuille à la surface d'un substrat transparent en verre ou en matière plastique.

**26.** Procédé de préparation d'un dispositif optique avec un voile inférieur à 1,2 $cd/m^2$, comportant les étapes consistant

à :

a) mélanger de la mélanine sous forme de poudre selon la revendication 16 avec une matière plastique;

b) faire polymériser le mélange ainsi obtenu.

**27.** Procédé selon la revendication 26, dans lequel ladite matière plastique est choisie dans le groupe comprenant les polymères thermoplastiques.

**28.** Dispositif optique avec un voile inférieur 1,2 cd/$m^2$, pouvant être obtenu par un procédé selon l'une quelconque des revendications 17 à 27.